Europäisches Patentamt

European Patent Office

Office européen des brevets

(19)

(11) Veröffentlichungsnummer: **0 062 143**
**B1**

(12) **EUROPÄISCHE PATENTSCHRIFT**

(45) Veröffentlichungstag der Patentschrift:
31.07.85

(21) Anmeldenummer: 82100864.6

(22) Anmeldetag: 06.02.82

(51) Int. Cl.⁴: **F 02 F 1/42**

(54) Zylinderkopf für luftverdichtende, selbstzündende Einspritz-Brennkraftmaschinen.

(30) Priorität: 02.04.81 DE 3113308

(43) Veröffentlichungstag der Anmeldung:
13.10.82 Patentblatt 82/41

(45) Bekanntmachung des Hinweises auf die Patenterteilung:
31.07.85 Patentblatt 85/31

(84) Benannte Vertragsstaaten:
AT DE FR GB IT

(56) Entgegenhaltungen:
DE - A - 2 139 500
DE - B - 24 807
DE - C - 938 159
FR - A - 708 032
FR - A - 1 321 963
FR - A - 2 225 628
US - A - 2 788 776
US - A - 3 867 914

(73) Patentinhaber: BAYERISCHE MOTOREN WERKE
Aktiengesellschaft, Postfach 40 02 40 Petuelring 130,
D-8000 München 40 (DE)

(72) Erfinder: Henning, Richard, Ing.-grad.,
Lauingerstrasse 2, D-8000 München 50 (DE)

(74) Vertreter: Schweiger, Erwin, c/o Bayerische Motoren
Werke AG - AJ-35 Postfach 40 02 40 Petuelring 130,
D-8000 München 40 (DE)

**Beschreibung**

Die Erfindung geht im Oberbegriff des Patentanspruches 1 von der deutschen Patentanmeldung M 24 807/Ia/46a² aus.

Bei der aus dieser Druckschrift bekannten Diesel-Brennkraftmaschine weist der Zylinderkopf eine zum Zylinderraum zentrisch angeordnete Vorkammer auf, die mit dem Zylinderraum über einen Einsatz verbunden ist, der so viele Brennkanäle aufweist, wie Ventile im Zylinderkopfboden angeordnet sind. Dabei sind die Brennkanäle zwischen die Ventile im Zylinderkopfboden gerichtet, um die thermische Beanspruchung der Ventilteller herabzusetzen.

Bei dieser Diesel-Brennkraftmaschine sind um die Zylinderachse innerhalb der Zylinderprojektion auf den Zylinderkopfboden drei bzw. zwei Einlaß- und drei bzw. zwei Auslaßventile angeordnet. Diese für eine hohe spezifische Leistung vorgesehene Ventilanordnung ermöglicht jedoch in Verbindung mit der mittigen, relativ großvolumigen Vorkammer keine ausreichend intensive Kühlung der Stege zwischen den Ventilen. Die Stege sind durch die oben beschriebene Anordnung der Brennkanäle zusätzlich thermisch belastet. Besonders hoch belastet sind die Stege zwischen den heißen Auslaßventilen sowie die Stege zwischen den heißen Auslaß- und relativ kühlen Einlaßventilen. Hierbei treten an den Ventilsitzen erhebliche Temperaturunterschiede auf, die in nachteiliger Weise zu einem Verziehen der Ventilsitze führen mit der Folge verminderter Motorleistung oder eines Ausfalls des Motors.

Schließlich ergibt sich durch die ausschließlich zwischen Einlaßventilen gelegenen und damit relativ kühlen Stege im Zylinderkopfboden insgesamt eine ungünstige Temperaturverteilung. Diese kann zu Rissen in den Stegen sowie zum Verziehen der Ventilsitze und des Zylinderkopfbodens mit Undichtigkeiten der Ventile und der Zylinderkopfdichtung führen.

In der DE-C-938 159 ist ein flüssigkeitsgekühlter Zylinderkopf mit einer Wirbelkammer beschrieben, die im wesentlichen innerhalb der Projektion des Zylinders auf den ebenen Zylinderkopfboden angeordnet ist. Die Wirbelkammer ist mit ihrem Brennkanal so ausgerichtet, daß der Brennkanal in einem Steg im Zylinderkopfboden zwischen einem versenkt angeordneten Einlaßventil und einem versenkt angeordneten Auslaßventil mündet. Zur intensiven Kühlung des Steges bilden der Ein- und der Auslaßkanal mit der Außenwandung der Wirbelkammer angenähert sternförmig angeordnete Kanäle, denen am Zylinderumfang im Zylinderblock und im Zylinderkopfboden Kühlwasseraustrittsbohrungen zugeordnet sind. Diesen Austrittsbohrungen sind zur Erzielung einer besonders wirksamen Kühlung Ablenkflächen im Kühlmittelraum des Zylinderkopfes zugeordnet. Neben der gießtechnisch komplizierten Gestaltung des Kühlmittelraumes führt auch hierbei die intensive Kühlung des Zylinderkopfbodens im Bereich des relativ kalten Einlaßkanals im Verhältnis zum Bereich des heißen Auslaßventils sowie der Wirbelkammer zu einer ungünstigen Temperaturverteilung im Zylinderkopfboden mit den bekannten Nachteilen.

Der Erfindung liegt die Aufgabe zugrunde, bei einem Zylinderkopf für eine Einspritz-Brennkraftmaschine der eingangs beschriebenen Art die um Auslaßventil und Nebenbrennkammer im Zylinderkopfboden bestehenden Heißzonen und die um Einlaßventile bzw. -kanäle gegebenen Kaltzonen einander derart zuzuordnen, daß eine relativ gleichmäßige Temperaturverteilung im Zylinderkopfboden erreicht ist.

Diese Aufgabe ist mit den im Kennzeichen des Anspruches 1 angegebenen Mitteln gelöst.

Der Vorteil der Erfindung liegt in der Trennung der hoch wärmebelasteten Stellen um die Nebenbrennkammer und das Auslaßventil durch dazwischenliegende, intensiv gekühlte Bereiche um die Einlaßventile bzw. -kanäle, wobei der vom Brennstrahl getroffene Hauptsteg in der Kaltzone zwischen den Einlaßventilen angeordnet ist. Erreicht ist damit eine weitgehend gleichmäßige Temperaturverteilung im Zylinderkopfboden, der auch bei hoher thermischer Belastung infolge hoher spezifischer Leistung aufgeladener Maschinen eine hohe Dauerfestigkeit aufweist.

Aus der DE-A-2 139 500 ist zwar eine Diesel-Brennkraftmaschine mit zwei Einlaßventilen und einem Auslaßventil bekannt, jedoch sind bei dieser mit Direkteinspritzung versehenen Maschine wegen der dabei notwendigen Lage der Einspritzdüse etwa in Zylindermitte die in Reihe angeordneten Einlaßventile in parallelem Abstand von der Zylindermittenebene angeordnet und das Auslaßventil diametral zu einem Einlaßventil asymmetrisch zu den Einlaßventilen. Bei einer mehrzylindrigen Brennkraftmaschine ist somit das Auslaßventil in nachteiliger Weise nahe dem durch den Wärmeabfall des benachbarten Zylinders bekannt kritischen Bereich des Zylinderkopfes angeordnet. Diese nachteilige Anordnung führt zum Verzug des Zylinderkopfes im Bereich benachbarter Zylinder, vor allem bei spezifisch hoher Belastung, und damit zu bleibender Verformung mit unzureichender Abdichtung zwischen benachbarten Zylindern.

Dieser Nachteil ist in Ausgestaltung der Erfindung gemäß den Merkmalen des Anspruches 2 vermieden. Mit dieser Ausgestaltung ist bei einer mehrzylindrigen Brennkraftmaschine mit einem über alle Zylinder sich einteilig erstreckenden Zylinderkopf in dessen Längsmittenbereich durch in Reihe angeordnete Einlaßkanäle eine relativ kühle Zone erreichbar, wobei die Heißstellen der Nebenbrennkammer und des Auslaßventils nahe den Längsseiten des Zylinderkopfes angeordnet sind. Da hierbei ein nicht unwesentlicher Wärmeanteil jeder Heißstelle über die benachbarte Zylinderkopfseite abgeführt wird, bleibt der Zylinderkopf in seinem über die schmalsten Dichtungsabschnitte zwischen benachbarten Zylindern hinwegführenden Längsmittenbereich relativ kühl und damit für eine einwandfreie Abdichtung zwischen benachbarten Zylindern ausreichend steif.

Die Anordnung nach Anspruch 2 hat weiter den Vorteil, daß der Abstand zwischen dem Brennkanal und dem hierzu diametral gelegenen Auslaßventil für eine thermisch geringere Beeinflussung des Auslaßventils vorteilhaft groß ist.

Mit der weiteren Ausgestaltung der Erfindung nach den Merkmalen des Anspruches 3 sind die diametral gelegenen Heißzonen von der dazwischenliegenden, durch die Einlaßkanäle gebildeten Kaltzone jeweils durch gleich breite Stegpartien getrennt. Da diese Stegpartien ferner mit dem dem Brennstrahl ausgesetzten Hauptsteg zwischen den Einlaßkanälen verbunden sind, ist über diese vom Brennstrahl abseits liegenden Nebenstege eine gute Wärmeverteilung im Zylinderkopfboden erreicht.

Mit der Ausgestaltung nach den Merkmalen des Anspruches 4 sind im nahen Bereich des Zylinderkopfbodens sowohl voneinander als auch vom Auslaßkanal und der Brennkammerwandung getrennt angeordnete Einlaßkanäle erreicht. Durch die getrennte Anordnung der vorerwähnten Bauteile sind einerseits diese rundum vom Kühlmittel beaufschlagt und andererseits wird der Zylinderkopfboden über die Stege zwischen den Bauteilen intensiv gekühlt. So sind in den kühlmittelseitigen Bereichen der Nebenstege durch die Anordnung der oben erwähnten Bauteile im Kühlmittelraum auf den Hauptsteg strahlenartig ausgerichtete Kanäle für das Kühlmittel erreicht. Diese Kanäle sind so ausgerichtet und bemessen, daß der thermisch hochbelastete Hauptsteg von einem den Zylinderkopf längs oder/und quer durchströmenden Kühlmittel intensiv gekühlt ist. Da der Zylinderkopfboden auch in den Zwischenräumen von Auslaß- und Einlaßkanälen und der Nebenbrennkammer vom Kühlmittel beaufschlagt ist, kann die Wandstärke des Zylinderkopfbodens in Abstimmung mit der bei höchster Motorleistung erreichten Kühlung besser den Erfordernissen angepaßt werden, wobei evt. durch gezielte Wandstärkenunterschiede die Temperaturverteilung vorteilhaft beeinflußt werden kann.

Der durch unterbrechungsfreie Kühlmittelführung intensiv gekühlte Zylinderkopfboden ist gemäß einem Merkmal des Anspruches 5 durch im Kühlmittelraum relativ steil ansteigend die Zylinderkopfdeckwand durchsetzende Einlaßkanäle vorteilhaft ausgesteift. Diese bei einer mehrzylindrigen Einspritz-Brennkraftmaschine mit einem durchgehenden Zylinderkopf den Zylinderkopfboden im Längsmittenbereich gegen die Deckwand aussteifenden Einlaßkanäle teilen im Bereich jedes Zylinders bei einem der Länge nach durchströmten Zylinderkopf den Kühlmittelstrom in zwei Teilströme. Ein Teilstrom ist über den nach einem Merkmal des Anspruches 5 im wesentlichen ringsum freiliegend im Kühlmittelraum zwischen Zylinderkopfboden und Zylinderkopfdeckwand verlaufenden Auslaßkanal geführt, während der zweite Teilstrom nach einem weiteren Anspruchsmerkmal vor allem über die Nebenbrennkammer gelenkt ist. Somit ist über jede Heißstelle ein Teilstrom des Kühlmittels gelenkt, wobei beide Teilströme im Längsmittenbereich des Zylinderkopfes die durch die Ansaugluft relativ kühlen Einlaßkanäle umspülen. Durch diese Kühlmittelführung ist die intensive Kühlung des Hauptsteges vorteilhaft unterstützt. Weiter bleibt der Zylinderkopf im Längsmittenbereich auch bei hoher spezifischer Leistung durch die intensive Kühlung steif für eine einwandfreie Abdichtung im Bereich benachbarter Zylinder.

Die intensive Kühlung des Zylinderkopfes im Längsmittenbereich ist weiter unterstützt durch eine nach Merkmalen des Anspruches 6 zusätzliche Beaufschlagung bzw. Umspülung jeder Heißstelle mit dem Kühlmittel vom Zylinderblock her über Durchtrittsöffnungen im Zylinderkopfboden.

Die Erfindung ist anhand eines in der Zeichnung dargestellten Ausführungsbeispiels beschrieben. Die Zeichnung zeigt in

Fig. 1 die Ansicht auf den Zylinderkopfboden eines abschnittsweise dargestellten Zylinderkopfes einer luftverdichtenden, selbstzündenden Einspritz-Brennkraftmaschine,

Fig. 2 einen Vertikalschnitt durch den Zylinderkopf gemäß der Linie II-II in Fig. 1 und in

Fig. 3 einen Horizontalschnitt durch den Zylinderkopf im Bereich des Kühlmittelraumes gemäß der Linie III-III in Fig. 2.

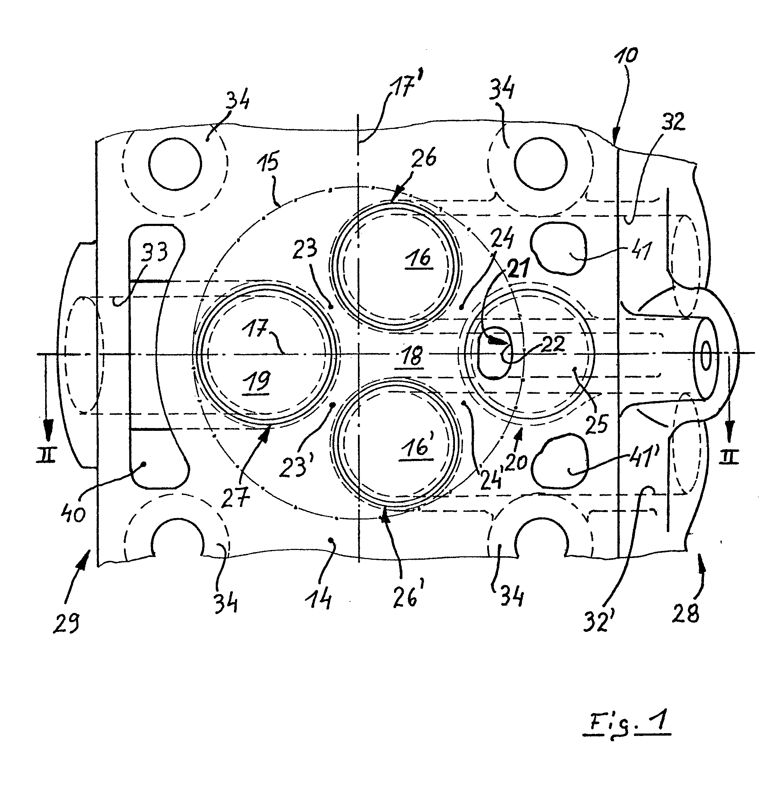

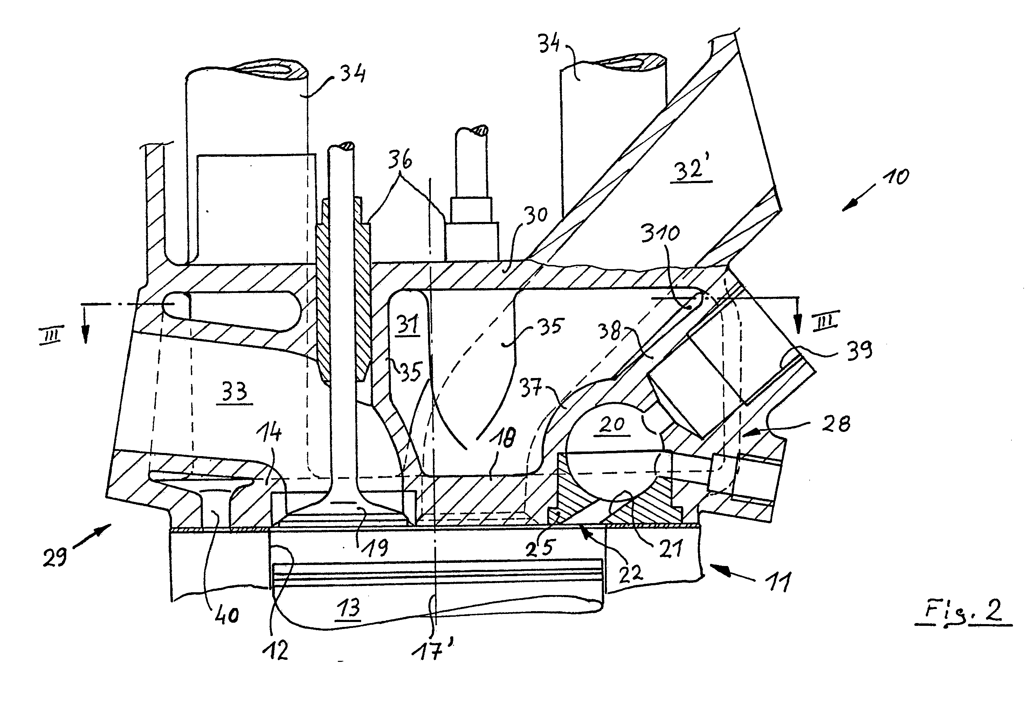

In Fig. 1 ist mit 10 ein Zylinderkopf bezeichnet für eine in Fig. 2 angedeutete luftverdichtende, selbstzündende Einspritz-Brennkraftmaschine 11 mit einem Zylinder 12 und einem Hubkolben 13. Im Zylinderkopfboden 14 sind innerhalb der Peripherie 15 der Projektion des Zylinders 12 zwei Einlaßventile 16, 16' beiderseits einer ersten Zylindermittenebene 17 durch einen Hauptsteg 18 getrennt angeordnet. Weiter ist innerhalb der Peripherie 15 in der Zylindermittenebene 17 ein einziges Auslaßventil 19 angeordnet, das zum Hauptsteg 18 mittig angeordnet ist. Dem Auslaßventil 19 diametral gegenüber in der Zylindermittenebene 17 ist im Zylinderkopf 10 eine Nebenbrennkammer 20 angeordnet, die zum Teil außerhalb der Peripherie 15 der Zylinderprojektion liegt. Die Nebenbrennkammer 20 weist einen einzigen Brennkanal 21 auf, der in Richtung des Hauptsteges 18 zwischen die Einlaßventile 16 und 16' zum Auslaßventil 19 gerichtet ist.

Um bei im Durchmesser relativ großen Einlaßventilen 16, 16' zugleich einen breiten Hauptsteg 18 zu erzielen, sind die Einlaßventile 16, 16' zu einer zweiten, zur ersten Zylindermittenebene 17 senkrecht angeordneten Zylindermittenebene 17' übergreifend angeordnet. Zur Erzielung eines langen Hauptsteges 18 und damit zur Verringerung der thermischen Belastung des Auslaßventiles 19 ist dieses sowie die Nebenbrennkammer 20 mit ihrer zylinderseitigen Mündung 22 des Brennkanals 21 jeweils nahe der Peripherie 15 der Zylinderprojektion angeordnet.

Der Zylinderkopfboden 14 ist, wie aus Fig. 2 hervorgeht, an seiner dem Zylinder 12 zugewandten Seite eben ausgebildet. Im Zylinderkopfboden 14 sind durch Stege 23, 23' bzw. 24, 24' bzw. 18 getrennt angeordnet: Ventilsitzringe 26, 26' für die Einlaßventile 16, 16', ein Ventilsitzring 27 für das Auslaßventil 19 sowie ein Brennereinsatz 25 für die Nebenbrennkammer 20. Die Anordnung der Stege ist so getroffen, daß zwischen den Einlaß-Ventilsitzringen 26, 26' und dem Auslaß-Ventilsitzring 27 sowie dem Brennereinsatz 25 jeweils ein Nebensteg 23, 23' bzw. 24, 24' ausgebildet ist, der an seiner engsten Stelle etwa die halbe Breite des Hauptsteges 18 zwischen den Einlaßventilen 16, 16' aufweist. Damit ist der durch den Brennstrahl aus der Nebenbrennkammer 20 thermisch hochbelastete Hauptsteg 18 über die Nebenstege 23, 23' und 24, 24' durch relativ große Wärmeleitquerschnitte mit den übrigen Partien des Zylinderkopfbodens 14 in Verbindung gebracht.

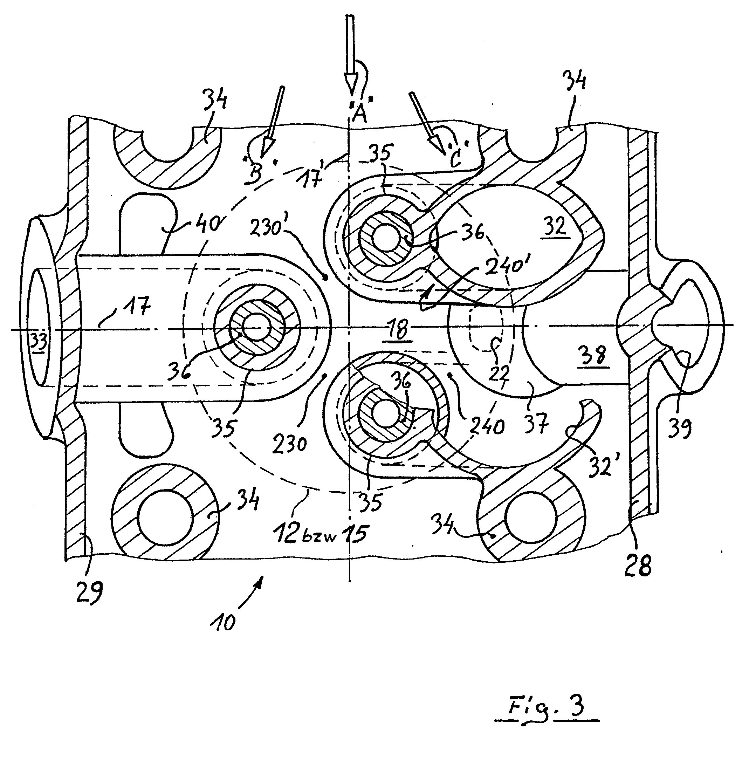

Aus Fig. 2 ist zu erkennen, daß der Zylinderkopf 10 für eine Kühlung durch eine Flüssigkeit über dem Zylinderkopfboden 14 zwischen den Zylinderkopfseiten 28 und 29 und einer Zylinderkopfdeckwand 30 einen Kühlmittelraum 31 aufweist. Weiter zeigt insbesondere Fig. 3, daß die Wände der zu den Einlaßventilen 16, 16' führenden Kanäle 32, 32' im Anschluß an den Zylinderkopfboden 14 ringsum freiliegend ausgebildet sind und mit Wandabschnitten des Auslaßkanals 33 einerseits und mit Wandabschnitten der Nebenbrennkammer 20 andererseits im Bereich der kühlmittelseitigen Innenflächen der Nebenstege 23, 23' bzw. 24, 24' Kanäle 230, 230' bzw. 240, 240' bilden, Fig. 3, die zum Hauptsteg 18 gerichtet sind. Damit ist über den Nebenstegen 23, 23' und 24, 24' zum Hauptsteg 18 im Kühlmittelraum 31 eine unterbrechungsfreie Kühlmittelführung auf dem Zylinderkopfboden 14 erreicht mit intensiver Kühlung des thermisch hochbelasteten Hauptsteges 18. Weiter ist aus den Zeichnungen zu entnehmen, daß die Einlaßkanäle 32, 32' und der Auslaßkanal 33 jeweils mit kreisrundem Querschnitt an den Zylinderkopfboden 14 anschließen, wodurch eine gute Kühlmittelströmung erzielt und Wärmestaupunkte im Zylinderkopfboden 14 vermieden sind. Diese Maßnahmen unterstützen eine günstige Temperaturverteilung im Zylinderkopfboden 14. Eine günstige Temperaturverteilung ist vor allem aber dadurch erreicht, daß die Heißzonen um das Auslaßventil 19 und die diametrale Nebenbrennkammer 20 durch Kaltzonen um die von der zugeführten Frischluft gekühlten Einlaßkanäle 32, 32' zu den Einlaßventilen 16, 16' getrennt sind, wobei der thermisch hochbelastete Hauptsteg 18 in der Kaltzone zwischen den Einlaßventilen 16, 16' angeordnet ist. Durch diese Anordnung der zwei Einlaßventile 16, 16' und des einzigen Auslaßventils 19 sowie der Nebenbrennkammer 20 ist der Zylinderkopf 10 im thermisch und mechanisch hochbelasteten Längsmittelbereich intensiv gekühlt und weist deshalb auch bei hoher spezifischer Leistung aufgeladener Maschinen die gewünschte Steifigkeit bei günstigen Wanddicken auf.

Die Steifigkeit des Zylinderkopfes 10 ist durch konstruktive Maßnahmen noch dadurch erhöht, daß die Einlaßkanäle 32, 32' gesondert angeordnet sind und einerseits in der Zylinderkopfdeckwand 30 ausmünden und andererseits mit Einlaßventilen 16, 16' in Verbindung stehen, die zur Zylindermittelebene 17' übergreifend angeordnet sind. Eine besondere Aussteifung des Zylinderkopfes 10 im Längsmittelbereich ist insbesondere dadurch erreicht, daß die Einlaßkanäle 32, 32' im Anschluß an den Zylinderkopfboden 14, Fig. 2, im Kühlmittelraum 31 relativ steil ansteigen und die Zylinderkopfdeckwand 30 durchsetzen und weiter ihre Wände mit in dem aus Leichtmetallguß ausgeführten Zylinderkopf 10 integrierten Schraubenpfeiffen 34 für nicht dargestellte Zylinderkopfschrauben vergossen ausgebildet sind, Fig. 3. Weiter sind sowohl die Einlaßkanäle 32, 32' als auch der im wesentlichen ringsum freiliegend im Kühlmittelraum 31 zwischen Zylinderkopfboden 14 und Zylinderkopfdeckwand 30 zur Mündung in der Zylinderkopfseite 29 verlaufend angeordnete Auslaßkanal 33 jeweils durch eine Säule 35 zur Aufnahme einer Ventilschaftführung 36 mit der Zylinderkopfdeckwand 30 verbunden. Mit der erfindungsgemäßen Anordnung der drei Ventile ist somit für den Zylinderkopfboden 14 über dem Zylinder 12 im Zylinderkopf 10 ein steifer Aufbau bei günstigen Wandstärken und einfacher Gußkerngestaltung erzielt.

Die im Anschluß an die Einlaßventile 16, 16' im Kühlmittelraum 31 relativ steil ansteigenden Einlaßkanäle 32, 32' bilden mit der benachbarten Zylinderkopfseite 28 einen Abschnitt 310 des Kühlmittelraumes 31, in dem frei im Kühlmittel und zu den Einlaßkanälen 32, 32' mittig liegende Ausformungen 37 und 38 des Zylinderkopfbodens 14 und der Zylinderkopfseite 28 zur Aufnahme der Nebenbrennkammer 20 und der Einsatzbohrung 29 für eine nicht gezeigte Einspritzdüse angeordnet sind. Die im Kühlmittelraum 31 verlaufenden Abschnitte der Einlaßkanäle 32, 32' zu den in Reihe parallel zur zweiten Zylindermittelebene 17' angeordneten Einlaßventilen 16, 16' teilen somit einen den Zylinderkopf 10 gemäß Pfeil »A« parallel zur Zylindermittelebene 17' durchsetzenden Kühlmittelstrom im Bereich des Zylinders 12 in die durch die Pfeile »B« und »C« angedeuteten Teilströme. Somit ist den diametral einander gegenüberliegenden Heißzonen um das Auslaßventil 19 bzw. den Auslaßkanal 33 und der Nebenbrennkammer 20 bzw. der sie aufnehmenden Ausformung 37 jeweils ein Teilstrom gemäß den Pfeilen »B« und »C« zugeführt. Von jedem der Teilströme gemäß den Pfeilen »B« und »C« umspült ein Anteil die durch die zugeführte Frischluft gekühlten Einlaßkanäle 32, 32' und bespült ferner über die Kanäle 230, 230' bzw. 240, 240' die Nebenstege 23, 23' bzw. 24, 24' sowie den Hauptsteg 18. Die Längsströmung gemäß Pfeil »A« im Zylinderkopf 10 kann durch einander entgegengerichtete Querströmungen im Bereich über dem Zylinder 12 überlagert sein, wofür einerseits im Bereich des Auslaßkanals 33 zwischen benachbarten Schraubenpfeiffen 34 im Zylinderkopfboden 14 eine langlochartige Durchtrittsöffnung 40 und andererseits zwischen der Nebenbrennkammer 20 und jeder benachbarten Schraubenpfeiffe 34 jeweils eine Durchtrittsöffnung 41, 41' angeordnet ist, die mit nicht gezeigten Kühlmittel-Durchtrittsöffnungen im Zylinderblock korrespondieren.

## Patentansprüche

1. Zylinderkopf (10) für luftverdichtende, selbstzündende Einspritz-Brennkraftmaschine (11),

- mit einem im wesentlichen plattenartigen Zylinderkopfboden (14),
- an den kühlmittelseitig voneinander getrennte Wandungen von Gaswechselkanälen (32, 32', 33) und einer Nebenbrennkammer (20) anschließen und
- der brennraumseitig etwa in einer gemeinsamen Ebene angeordnete Dichtsitze (26, 26', 27) für Ventile in den Mündungen der Gaswechselkanäle (32, 32', 33) aufweist,
- wobei die Nebenbrennkammer (20) einen Brennkanal (21) von gegenüber dem Kammerquerschnitt kleinerem Querschnitt umfaßt und
- der Brennkanal (21) auf einen zwischen zwei Einlaßventilen (16, 16') im Zylinderkopfboden (14) sich erstreckenden, relativ breiten Hauptsteg (18) etwa mittig ausgerichtet ist,

dadurch gekennzeichnet,

- daß im Zylinderkopfboden (14) ein Auslaßventil (19) diametral gegenüber der Mündung (22) eines einzigen Brennkanals (21) der Nebenbrennkammer (20) angeordnet ist.

2. Zylinderkopf nach Anspruch 1, mit beiderseits einer ersten Zylindermittenebene angeordneten Einlaßventilen, dadurch gekennzeichnet,

- daß die beiden Einlaßventile (16, 16') zu einer zweiten, zur ersten senkrecht angeordneten Zylindermittenebene (17') annähernd tangierend bis übergreifend und
- das Auslaßventil (19) und die zylinderseitige Mündung (22) des Brennkanals (21) der Nebenbrennkammer (20) mittig in der ersten Zylindermittenebene (17) angeordnet sind, wobei
- das Auslaßventil (19) und die Mündung (22) jeweils nahe der Peripherie (15) einer Zylinderprojektion angeordnet sind.

3. Zylinderkopf nach Anspruch 2, mit einem ebenen Zylinderkopfboden und darin eingesetzten Ventilsitzringen, dadurch gekennzeichnet, daß zwischen den Ventilsitzringen (26, 26') der Einlaßventile (16, 16') und dem Ventilsitzring (27) des Auslaßventils (19) sowie einem Brennereinsatz (25) der Nebenbrennkammer (20) jeweils ein Nebensteg (23, 23'; 24, 24') ausgebildet ist, der an seiner engsten Stelle etwa die halbe Breite des Hauptsteges (18) zwischen den Einlaßventilen (16, 16') aufweist.

4. Zylinderkopf nach Anspruch 3, mit einem Kühlmittelraum für Flüssigkeitskühlung sowie mit voneinander getrennt durch den Kühlmittelraum verlaufenden Einlaßkanälen, wobei die Einlaßkanäle auf einer Zylinderkopfseite und der Auslaßkanal auf der gegenüberliegenden Zylinderkopfseite münden, dadurch gekennzeichnet,

- daß die Wände der Einlaßkanäle (32, 32') im Kühlmittelraum (31) wenigstens in den dem Zylinderkopfboden (14) nahen Abschnitten ringsum frei im Kühlmittelraum angeordnet sind und
- mit Wandabschnitten des Auslaßkanals (33) einerseits und mit Wandabschnitten der Nebenbrennkammer (20) andererseits im Bereich der kühlmittelseitigen Innenflächen der Nebenstege (23, 23' bzw. 24, 24') Kanäle (230, 230' bzw. 240, 240') bilden,
- die zum Hauptsteg (18) hin gerichtet sind.

5. Zylinderkopf nach Anspruch 4, bei dem über dem Zylinderkopfboden zwischen den Zylinderkopfseiten und einer Zylinderkopfdeckwand der Kühlmittelraum ausgebildet ist,

dadurch gekennzeichnet,

- daß der Auslaßkanal (33) im wesentlichen ringsum freiliegend im Kühlmittelraum (31) zwischen Zylinderkopfboden (14) und Zylinderkopfdeckwand (30) angeordnet ist und in einer Zylinderkopfseite (29) ausmündet,
- während die Einlaßkanäle (32, 32') im Anschluß an den Zylinderkopfboden (14) ringsum freiliegen, im Kühlmittelraum (31) relativ steil ansteigen und die Zylinderkopfdeckwand (30) durchsetzen,
- wobei die ansteigenden Einlaßkanäle (32, 32') mit der benachbarten Zylinderkopfseite (28) einen Abschnitt (310) des Kühlmittelraumes (31) bilden,
- in dem frei im Kühlmittelraum (31) liegende Ausformungen (37, 38) des Zylinderkopfbodens (14) und der Zylinderkopfseite (28) zur Aufnahme der Nebenbrennkammer (20) und der Einsatzbohrung (39) einer Einspritzdüse angeordnet sind.

6. Zylinderkopf nach Anspruch 5,

- der zwischen Zylinderkopfboden und Zylinderkopfdeckwand nahe den Zylinderkopfseiten angeordnete Schraubenpfeiffen und
- im Zylinderkopfboden Kühlmittel-Durchtrittsöffnungen aufweist,

dadurch gekennzeichnet,

— daß im Bereich des Auslaßkanals (33) zwischen zwei Schraubenpfeiffen (34) eine langlochartige Kühlmittel-Durchtrittsöffnung (40) und
— zwischen der Nebenbrennkammer (20) und den beiden benachbarten Schraubenpfeiffen (34) jeweils eine Kühlmittel-Durchtrittsöffnung (41, 41') angeordnet sind.

## Claims

1. A cylinder head (10) for an air-compressing, self-igniting injection combustion engine (11),

— with a substantially plate-like cylinder head base (14),
— at which, on the coolant side, the mutually separated walls of gas-exchange ducts (32, 32', 33) and of a secondary combustion chamber (20) adjoin and
— which, on the combustion-chamber side, comprises, in the mouths of the gas-exchange ducts (32, 32', 33), sealing seats (26, 26', 27) for valves that are arranged substantially in a common plane,
— the subsidiary combustion chamber (20) comprising a combustion duct (21) having a cross-section smaller than that of the chamber, and
— the combustion duct (21) being directed approximately centrally on to a relatively wide main web (18), extending between two inlet valves (16, 16') in the base (14) of the cylinder head,

characterized in that

— an outlet valve (19) is arranged in the base (14) of the cylinder head and diametrally opposite the mouth (22) of a single combustion duct (21) of the subsidiary combustion chamber (20).

2. A cylinder head according to claim 1, with inlet valves arranged on both sides of a first central plane of the cylinder, characterized in that

— the two inlet valves (16, 16') are arranged in an approximately tangential to overlapping relationship to a second central plane (17') of the cylinder that is at right angles to the first, and
— the outlet valve (19) and the cylinder-side mouth (22) of the combustion duct (21) of the subsidiary combustion chamber (20) are disposed centrally in the first central plane (17) of the cylinder,
— the outlet valve (19) and the mouth (22) each being arranged near the periphery (15) of a projection of the cylinder.

3. A cylinder head according to claim 2, with a planar cylinder head base and valve-seat rings inserted therein, characterized in that, between the valve-seat rings (26, 26') of the inlet valves (16, 16') and the valve-seat ring (27) of the outlet valve (19) as well as a burner insert (25) of the subsidiary combustion chamber (20), a subsidiary web (23, 23'; 24, 24' respectively) is formed which, at its narrowest point, is approximately half the width of the main web (18) between the inlet valves (16, 16').

4. A cylinder head according to claim 3, with a coolant chamber for fluid cooling and with inlet ducts which are separated from each other and extend through the coolant chamber, the inlet ducts discharging at one side of the cylinder head and the outlet duct at the opposite side of the cylinder head,

characterized in that

— the walls of the inlet ducts (32, 32') in the coolant chamber (31) are arranged freely around the interior of the coolant chamber, at least in the portions adjacent the base (14) of the cylinder head, and
— with wall portions of the outlet duct (33) on the one hand and with wall portions of the subsidiary combustion chamber (20) on the other, form, in the zone of the coolant-side inner faces of the subsidiary webs (23, 23'; 24, 24'), ducts (230, 230'; 240, 240'),
— which are directed towards the main web (18).

5. A cylinder head according to claim 4, where in the coolant chamber is formed above the base of the cylinder head and between the sides of the cylinder head and a covering wall of the cylinder head, characterized in that

— the outlet duct (33) is arranged substantially free-lying around the interior of the coolant chamber (31) between the base (14) and the covering wall (30) of the cylinder head and discharges at a side (29) of the cylinder head,
— whereas the inlet ducts (32, 32') lie free around the interior of the connection to the base (14) of the cylinder head, rise relatively steeply in the coolant chamber (31) and pass through the covering wall (30) of the cylinder head,
— the rising inlet ducts (32, 32') forming, with the adjacent side (28) of the cylinder head, a portion (310) of the coolant chamber (31),
— in which formations (37, 38) of the base (14) and the side (28) of the cylinder head that lie free within the coolant chamber (31) are arranged for receiving the subsidiary combustion chamber (20) and the bore (39) for the insertion of an injection nozzle.

6. A cylinder head according to claim 6,

— which comprises screw pipes arranged between the base and covering wall of the cylinder head and near the sides of the cylinder head, and

— in the base of the cylinder head, openings for the passage of coolant,

characterized in that

— a slot-like opening (40) for the passage of coolant is arranged in the zone of the outlet duct (33) between two screw pipes (34), and

— an opening (41, 41') for the passage of coolant is arranged between the subsidiary combustion chamber (20) and each of the two adjacent screw pipes (34).

## Revendications

1. Tête de cylindre (ou culasse de cylindre) (10) pour un moteur à combustion interne (11) à compression d'air, à auto-allumage et injection

— avec un fond (14), essentiellement en forme de plaque, de la tête de cylindre,

— auquel se raccordent, côté fluide de refroidissement, des parois séparées l'une de l'autre de canaux d'échange de gaz (32, 32', 33) et une chambre de combustion auxiliaire (20),

— ce fond de tête de cylindre comportant, côté chambre de combustion, des sièges d'étanchéité (26, 26', 27), disposés à peu près dans un plan commun, pour des soupapes aux débouchés des canaux d'échange de gaz (32, 32', 33),

— la chambre de combustion auxiliaire (20) comprenant un canal de combustion (21) de section transversale inférieure à celle de la chambre,

— ce canal de combustion (21), s'étendant sur le fond (14) de la tête de cylindre entre les deux soupapes d'admission (16, 16'), étant aligné à peu près au milieu de la traverse principale (18) relativement large,

tête de cylindre caractérisée en ce que:

— une soupape d'échappement (19) est disposée sur le fond (14) de la tête de cylindre en étant diamètralement opposée à l'embouchure (22) d'un canal de combustion unique (21) de la chambre de combustion auxialiaire (20).

2. Tête de cylindre selon la revendication 1, avec des soupapes d'admission disposées des deux côtés d'un premier plan médian du cylindre, tête de cylindre caractérisée en ce que:

— les deux soupapes d'admission (16, 16') sont disposées, par rapport à un second plan médian (17') du cylindre, perpendiculaires au premier plan médian du cylindre de façon à tangenter à peu près ce plan ou même à empiéter sur lui,

— la soupape d'échappement (19) et le débouché côté cylindre (22) du canal de combustion (21) de la chambre de combustion auxiliaire (20) sont disposés au milieu dans le premier plan médian (17) du cylindre,

— la soupape d'échappement (19) et le débouché (22) sont respectivement disposés au voisinage de la périphérie (15) d'une projection du cylindre.

3. Tête de cylindre selon la revendication 2, avec un fond plan de tête de cylindre et des anneaux de sièges de soupapes placés dans ce fond, tête de cylindre caractérisée en ce que, entre les anneaux de sièges de soupapes (26, 26') des soupapes d'admission (16, 16') et l'anneau de siège de soupape (27) de la soupape d'échappement (19) ainsi qu'une garniture de brûleur (25) de la chambre de combustion auxiliaire (20) est respectivement ménagée une traverse auxiliaire (23, 23'; 24, 24') qui, à son emplacement le plus étroit, a environ une largeur moitié de celle de la traverse principale (18) entre les soupapes d'admission (16, 16').

4. Tête de cylindre selon la revendication 3, avec une chambre de fluide de refroidissement pour le refroidissement par un liquide, ainsi qu'avec des canaux d'admission séparés l'un de l'autre s'étendant à travers cette chambre de fluide de refroidissement, ces canaux d'admission débouchant sur une des faces de la tête de cylindre, tandis que le canal d'échappement débouche sur la face opposée de la tête de cylindre, tête de cylindre caractérisée en ce que:

— les parois des canaux d'admission (32, 32'), dans la chambre de fluide de refroidissement (31), sont disposées, au moins dans leur partie voisine du fond (14) de la tête de cylindre, en étant dégagées tout autour dans la chambre de fluide de refroidissement,

— des parties de paroi du canal d'échappement (33), d'une part, et des parties de paroi de la chambre de combustion auxiliaire (20), d'autre part, formant au voisinage des surfaces internes côté fluide de refroidissement des traverses auxiliaires (23, 23' ou bien 24, 24'), des canaux (230, 230' ou bien 240, 240') qui sont orientés vers la traverse principale (18).

5. Tête de cylindre selon la revendication 4, dans laquelle la chambre de fluide de refroidissement est ménagée au-dessus du fond de la tête de cylindre entre les côtés de la tête de cylindre et une paroi de recouvrement de la tête de cylindre, tête de cylindre caractérisée en ce que:

— la canal d'échappement (33) est disposé, en étant en partique dégagé tout autour, dans la chambre de fluide de refroidissement (31) entre le fond (14) de la tête de cylindre et la paroi de recouvrement (30) de la tête de cylindre et il débouche dans un côté (29) de la tête de cylindre,

— tandis que les canaux d'admission (32, 32') sont dégagés tout autour à leurs raccordements avec le fond (14) de la tête de cylindre, montent de façon relativement abrupte dans la chambre (31) de fluide de refroidissement, et traversent la paroi de recouvrement (30) de la tête de cylindre,

— les canaux d'admission (32, 32') montant ainsi, constituent avec le côté voisin (28) de la tête de cylindre, une partie (310), de la chambre (31) de fluide de refroidissement,

— des excroissances (37, 38) du fond (14) de la tête de cylindre et du côté (28) de la tête de cylindre, prévues pour le logement de la chambre de combustion auxiliaire (20) et d'un perçage (39) pour la mise en place d'une buse d'injection, sont disposées, en étant dégagées, dans la chambre (31) de fluide de refroidissement.

6. Tête de cylindre selon la revendication 5, comportant:

— entre le fond de la tête de cylindre et la paroi de recouvrement de la tête de cylindre, des pipes de vis disposées au voisinage des côtés de la tête de cylindre,

— des orifices de passage du fluide de refroidissement dans le fond de la tête de cylindre,

tête de cylindre caractérisée en ce que:

— un orifice de passage (40) du fluide de refroidissement, en forme de boutonnière, est disposé au voisinage du canal d'échappement (33) entre deux pipes de vis (34),

— un orifice de passage (41, 41') du fluide de refroidissement est respectivement disposé entre la chambre de combustion auxiliaire (20) et chacune des deux pipes de vis (34) voisines.

Fig. 1

Fis. 2

0 062 143

Fig. 3